# EUROPÄISCHE PATENTSCHRIFT

(11) **EP 1 689 279 B1**
(45) Veröffentlichungstag und Bekanntmachung des Hinweises auf die Patenterteilung: **23.04.2008**
(21) Anmeldenummer: 04819241.3
(22) Anmeldetag: 16.11.2004
(51) Int. Cl.: A47L 15/42

(54) **GESCHIRRSPÜLMASCHINE MIT EINEM SYSTEM ZUR WASSERAUFBEREITUNG**
DISHWASHER WITH A WATER PREPARATION SYSTEM
LAVE-VAISSELLE POURVU D'UN SYSTEME DE TRAITEMENT D'EAU

(30) Priorität: 26.11.2003 DE 10355139
(43) Veröffentlichungstag der Anmeldung: 16.08.2006
(73) Patentinhaber: BSH Bosch und Siemens Hausgeräte GmbH, 81739 München (DE)
(72) Erfinder: JERG, Helmut, 89537 Giengen (DE); HEILIGENMANN, Caroline, 71032 Böblingen (DE)
(86) Internationale Anmeldenummer: PCT/EP2004/052975
(87) Internationale Veröffentlichungsnummer: WO 2005/051157

(56) Entgegenhaltungen:
- WO-A-95/27682
- DE-A1- 4 004 057
- US-A1- 2003 094 412

## Beschreibung

Die Erfindung betrifft eine Geschirrspülmaschine umfassend ein System zur Wasseraufbereitung.

Üblicherweise werden in einer Geschirrspülmaschine im Laufe des Spülprogramms ein oder mehrere Reinigungsvorgänge durchgeführt, die von einer Klarspülphase gefolgt wird. Dabei erfährt die verwendete Spülflüssigkeit Verunreinigungen einerseits durch den Zusatz von waschaktiven Substanzen, wie z.B. Tensiden, und andererseits durch die vom Spülgut abgelösten Spülrückstände. Um am Ende des Spülprogramms ein zufriedenstellendes Spülergebnis zu erhalten, wird die Spülflotte in der Regel zumindest nach dem Vorspülgang und nach dem Hauptspülgang erneuert. Dabei wird die verbrauchte Spülflotte zusammen mit den darin enthaltenen waschaktiven Substanzen und Spülrückständen als Abwasser verworfen. Ferner wird mit jeder Erneuerung der Spülflotte im Laufe des Spülprogramms Frischwasser zugeführt und damit der Wasserbedarf der Geschirrspülmaschine erhöht.

Aus der DE 4004057 A1 ist eine Geschirrspülmaschine bekannt, die einen Wasseraufbereitungsbehälter mit einer UV-Lampe aufweist, der mit der Geschirrspülmaschine flüssigkeitsleitend verbunden ist. Der Wasseraufbereitungsbehälter dient zur Aufbereitung des verschmutzen behafteten Wassers, das zuvor während eines Teilprogrammschritts "Zwischenspülen und/oder Klarspülen" zur Reinigung des zu reinigenden Guts verwendet wurde. Die Entkeimung des Wassers im Wasseraufbereitungsbehälter erfolgt durch die UV-Lampe. Das Wasser wird in dem Wasseraufbereitungsbehälter gespeichert und ggf. für einen nachfolgenden Spülgang wieder verwendet.

Aufgabe der vorliegenden Erfindung ist es, eine Geschirrspülmaschine bereitzustellen, die es ermöglicht, den Wasserbedarf während des Spülbetriebs zu reduzieren, um so einerseits die Betriebskosten zu minimieren und andererseits die Umweltverträglichkeit zu verbessern.

Diese Aufgabe wird durch die erfindungsgemäße Geschirrspülmaschine mit den Merkmalen gemäß Anspruch 1 gelöst. Vorteilhafte Weiterbildungen der vorliegenden Erfindung sind jeweils in den Unteransprüchen 2 bis 10 gekennzeichnet.

Die erfindungsgemäße Geschirrspülmaschine umfasst ein System zur Wasseraufbereitung welcher einen Wasseraufbereitungsbehälter umfasst, der zumindest einen Teil der während des Spülbetriebs der Geschirrspülmaschine verwendeten Spülflüssigkeit aufnehmen kann, wobei im Wasseraufbereitungsbehälter während einer Wasseraufbereitungsphase mit Hilfe von Mikroorganismen die in der Spülflüssigkeit enthaltenen Verunreinigungen zumindest teilwese biologisch abgebaut werden, und wobei vorzugsweise das System zumindest einen vorzugsweise im Wasseraufbereitungsbehälter angeordneten Aufwuchskörper mit biologisch aktiver Oberfläche aufweist, die das Wachstum der Mikroorganismen sowie deren Anhaftung auf der Oberfläche begünstigt.

Auf diese Weise kann zumindest ein Teil oder sogar die gesamte Spülflüssigkeit, die während des Spülprogramms verwendet wurde, aufbereitet und für eine Wiederverwendung in einem darauffolgenden Spülgang bereitgestellt werden. Ein Vorteil der erfindungsgemäßen Geschirrspülmaschine besteht somit in der Reduzierung des Frischwasserbedarfs durch Aufbereitung und Wiederverwendung zumindest eines Teils der benutzten Spülflotte. Mit der erfindungsgemäßen Geschirrspülmaschine wird ferner die Umweltbelastung reduziert, da zumindest ein Teil der während des Spülbetriebs verwendeten Wassermenge nicht ungeklärt als Abwasser verworfen wird, sondern noch in der Geschirrspülmaschine wiederaufbereitet bzw. geklärt wird. Dabei bleibt aufgrund der biologischen Aufbereitung und Rückgewinnung der benutzten Spülflüssigkeit die Reinigungsleistung bei nachfolgenden Spülvorgängen der Geschirrspülmaschine erhalten.

Die in einer Geschirrspülmaschine verwendete Spülflüssigkeit erhält im Laufe des Spülvorgangs einen Gehalt gelöster organischer Substanzen, der im wesentlichen von der Art und dem Grad der Verschmutzung des zu reinigenden Spülguts abhängt. Mit Hilfe bestimmter Mikroorganismen, wie zum Beispiel Bakterien, die sich naturgemäß bereits im Wasser befinden, können die in der Spülflüssigkeit enthaltenen Schmutzstoffe abgebaut werden. Dabei nutzen die Bakterien die organischen Inhaltsstoffe der Spülflüssigkeit als Nahrungsgrundlage.

Beim Kontakt der Spülflüssigkeit mit den Mikroorganismen kommt es zu gezielten katalytischen und biologischen Abbaureaktionen, bei der sowohl organische Spülrückstände als auch Tenside abgebaut werden, was die Reinigung der Spülflüssigkeit im System bewirkt. Um eine ausreichende Reinigung der Spülflüssigkeit durch die biologischen Abbauprozesse zu erzielen, sollte die Spülflüssigkeit erfahrungsgemäß etwa 3,5 Stunden im Wasseraufbereitungsbehälter verbleiben, wobei diese Verweildauer von mehreren Kriterien wie dem Sauerstoffgehalt, der Art und dem Grad der Verschmutzung der Spülflüssigkeit oder der Anzahl und Wirksamkeit der im Wasseraufbereitungsbehälter vorhandenen Mikroorganismen abhängig ist. Da eine Geschirrspülmaschine im Haushaltsgebrauch üblicherweise höchstens einmal täglich betrieben wird, ist eine Verweildauer der Spülflüssigkeit im Wasseraufbereitungsbehälter von 3,5 Stunden in der Regel leicht zu verwirklichen.

Die überwiegende Zahl von Mikroorganismen kommen in der Natur in Form von Biofilmen vor. Die Biofilmbildung beginnt, wenn eine Zelle sich an einer Fläche festsetzt und sich dort vermehrt. Für die Haftung (Adhäsion) der Mikroorganismen an einer Oberfläche können unterschiedliche Ursachen verantwortlich sein. Nahezu jede Fläche bietet Adhäsionspotentiale für Mikroorganismen. Ein Teil der zur Wasserreinigung erforderlichen Mikroorganismen kann daher auf sogenannten Aufwuchskörpern, angesiedelt werden.

Je mehr Aufwuchskörper im Wasseraufbereitungsbehälter angeordnet sind, desto größer ist die biologisch aktive Oberfläche und damit der durch die biologischen Abbauprozesse bedingte Reinigungseffekt.

Ein besonderer Vorteil der Verwendung von Aufwuchskörper besteht in der Immobilisierung der Bakterien, die an den Aufwuchskörper anhaften, was einen geringen Schlammanfall im Wasseraufbereitungsbehälter sowie eine geringe Ausspülung der Mikroorganismen mit der Spülflüssigkeit aus dem Wasseraufbereitungsbehälter nach der Wasseraufbereitungsphase bewirkt. Die Mikroorganismen siedeln sich auf den Aufwuchskörpern an und bilden dort einen aus einer bakteriellen Mischkultur bestehenden Biofilm. Solche Biofilme entstehen insbesondere, wenn Mikroorganismen sich an Grenzflächen zwischen Gas- und Flüssigphasen (z.B. am freien Wasserspiegel), Flüssig- und Festphasen (z.B. am Aufwuchskörper im Wasseraufbereitungsbehälter) oder an Flüssig-/Flüssigphasen (z.B. an Öltröpfchen an der Wasseroberfläche) ansiedeln und einen Biofilm bilden.

Biofilme von Mikroorganismen entwickeln sich besonders gut, wenn die Oberfläche mit organischen Polymeren belegt ist. Bei einer weiteren bevorzugten Ausführungsform der vorliegenden Erfindung bestehen daher die Aufwuchskörper aus mechanisch und biologisch beständigem, zumindest teilweise aus Kunststoff oder Keramik hergestelltem Material, wie z.B. Blähton, Lava, Anthrazit oder Basalt, deren Oberfläche mit organischen Polymeren belegt ist.

Der biologische Abbauprozess der organischen Inhaltsstoffe im Wasser, wird maßgeblich durch die zur Verfügung stehende biologisch aktive Oberfläche bestimmt, mit der die Spülflüssigkeit in Kontakt kommt. Bei einer weiteren bevorzugten Ausführungsform sind daher im Wasseraufbereitungsbehälter möglichst große Oberflächen vorhanden, auf denen sich die Kulturen der Mikroorganismen ansiedeln können und die mit der Spülflüssigkeit während der Wasseraufbereitungsphase zumindest zeitweise in Kontakt stehen. Besonders vorteilhaft ist es, wenn der Wasseraufbereitungsbehälter biologisch aktive Oberflächen aufweist, die das Wachstum der Mikroorganismen sowie deren Anhaftung auf der Oberfläche begünstigen.

Bei einer weiteren bevorzugten Ausführungsform der vorliegenden Erfindung weist das System zur Wasseraufbereitung eine Vorrichtung zur Belüftung der Spülflüssigkeit zur Sauerstoffzufuhr in die Spülflüssigkeit auf. Für die biologische Aktivität und den biologischen Abbau der organischen Inhaltsstoffe in der Spülflüssigkeit ist der Sauerstoffgehalt im Wasser von maßgebender Bedeutung. Der durch die Belüftungseinheit erreichte aerobe Zustand ermöglicht den sogenannten aeroben biologischen Abbau der organischen Inhaltsstoffe. Die intrazelluläre, biochemische Oxidation der organischen Inhaltsstoffe durch Bakterien verbraucht kontinuierlich den in der Spülflüssigkeit gelösten Sauerstoff.

Durch die Belüftung der Spülflüssigkeit wird die Sauerstoffzufuhr sichergestellt, so dass möglichst ein permanenter Sauerstoffüberschuss in der Spülflüssigkeit vorhanden ist. Die Belüftung kann beispielsweise eine Luftpumpe umfassen, die vorzugsweise im unteren Bereich des Wasseraufbereitungsbehälters zumindest zeitweise Luft in die im Wasseraufbereitungsbehälter enthaltene Spülflüssigkeit einleitet. Zusätzlich oder alternativ kann zur Sauerstoffzufuhr in die Spülflüssigkeit im Wasseraufbereitungsbehälter eine Sprühvorrichtung vorgesehen sein, die vorzugsweise im oberen Bereich des Wasseraufbereitungsbehälters zumindest zeitweise Spülflüssigkeit in den Wasseraufbereitungsbehälter einleitet. Durch die Sprühvorrichtung wird die Spülflüssigkeit beispielsweise über Düsen zerstäubt und nimmt dabei Sauerstoff aus der Luft auf.

Zweckmäßigerweise wird die Spülflüssigkeit über eine bezüglich der Fließrichtung der Spülflüssigkeit hinter der Umwälzpumpe der Geschirrspülmaschine angeordneten Wasserweiche in den Wasseraufbereitungsbehälter eingeleitet. Dadurch kann die Notwendigkeit einer zusätzlichen Pumpe umgangen und stattdessen die Pumpleistung der ohnehin im Geschirrspüler vorhandenen Umwälzpumpe für die Beförderung der Spülflüssigkeit aus dem Spülkreislauf der Geschirrspülmaschine in den Wasseraufbereitungsbehälter ausgenutzt werden. Die Spülflüssigkeit kann aber auch über eine separate Pumpe in den Wasseraufbereitungsbehälter eingeleitet werden, was eine vom Betrieb der Umwälzpumpe unabhängige Beförderung der Spülflüssigkeit aus dem Spülkreislauf der Geschirrspülmaschine in den Wasseraufbereitungsbehälter ermöglicht.

Besonders vorteilhaft ist es, wenn das System zur Wasseraufbereitung eine Desinfektionseinheit, z. B. eine UV-Lampe oder eine Einrichtung zur Zugabe von Ozon, Wasserstoffperoxid oder Perborat aufweist, die beispielsweise im Bereich einer Auslassleitung aus dem Wasseraufbereitungsbehälter angeordnet ist, um die mit der Spülflüssigkeit aus dem Wasseraufbereitungsbehälter ausgeleiteten Mikroorganismen unwirksam zu machen. Damit kann sichergestellt werden, dass die im Wasseraufbereitungsbehälter aktiven Mikroorganismen, die mit der Spülflüssigkeit beim Ablassen aus dem Wasseraufbereitungsbehälter ausgespült werden, unwirksam sind, nachdem sie mit UV-Licht beaufschlagt wurden.

Die oben genannten Aufgaben werden ferner durch ein Verfahren zum Betrieb einer Geschirrspühnaschine mit einem System zur Wasseraufbereitung gelöst, das zumindest die folgenden Schritte umfasst:
- Einleiten zumindest eines Teils der während des Spülbetriebs verwendeten Spülflüssigkeit aus dem Wasserkreislauf der Geschirrspülmaschine in den Wasseraufbereitungsbehälter nach oder während der Durchführung eines Vorspülgangs, Hauptspülgangs oder Klarspülgangs in einen Wasseraufbereitungsbehälter;
- Aufbewahrung der Spülflüssigkeit im Wasseraufbereitungsbehälter während einer Wasseraufbereitungsphase, wobei mit Hilfe von Mikroorganismen die in der Spülflüssigkeit enthaltenen Verunreinigungen zumindest teilweise biologisch abgebaut werden; und
- Ausleiten der Spülflüssigkeit aus dem Wasseraufbereitungsbehälter in den Wasserkreislauf der Geschirrspülmaschine, wobei die nach der Wasseraufbereitungsphase aus dem Wasseraufbereitungsbehälter (1) ausgeleitete Spülflüssigkeit für einen darauffolgenden Vorspülgang verwendet wird.

Mit Hilfe dieses Verfahrens wird ein Teil der Spülflüssigkeit oder die gesamte Spülflüssigkeit, die während des Spülprogramms in der Geschirrspülmaschine verwendet wurde, im Wasseraufbereitungsbehälter aufbewahrt, dort während einer Wasseraufbereitungsphase aufbereitet und für eine Wiederverwendung in einem darauffolgenden Spülgang bereitgestellt. Das Verfahren bietet damit ebenfalls den Vorteil, dass der Frischwasserbedarf der Geschirrspülmaschine durch Aufbereitung und Wiederverwendung zumindest eines Teils der benutzten Spülflotte reduziert wird. Während der Wasseraufbereitungsphase werden die in der Spülflüssigkeit gelösten organischen Substanzen mittels bestimmter Mikroorganismen abgebaut, wobei die Mikroorganismen die organischen Inhaltsstoffe der Spülflüssigkeit als Nahrungsgrundlage nutzen. Daraus ergibt sich ferner der Vorteil einer geringeren Umweltbelastung, da zumindest ein Teil der während des Spülbetriebs verwendeten Wassermenge nicht ungeklärt als Abwasser verworfen wird, sondern noch in der Geschirrspülmaschine wiederaufbereitet und von organischen Schmutzstoffen befreit wird.

Obwohl die zur Wasserreinigung erforderlichen Mikroorganismen im allgemeinen bereits im Wasser vorhanden sind, kann dem System bei einer bevorzugten Ausführungsform des Verfahrens vor oder während der Wasseraufbereitungsphase zusätzlich Mikroorganismen zugegeben werden, beispielsweise in Form eines die entsprechenden Bakterien enthaltenen Pulvers oder Tabs, die dem Reinigungsbad der Geschirrspülmaschine beigefügt werden, die beispielsweise dem Reinigungsmittel beigemengt oder direkt in den Wasseraufbereitungsbehälter gegeben werden.

Zur Förderung der für die Reinigung der Verschmutzungen in der Spülflüssigkeit erforderlichen biologischen Abbauprozesse kann dem Verfahren noch in zusätzlicher Schritt vorangehen, bei dem zumindest ein Teil der zur Wasserreinigung erforderlichen Mikroorganismen auf zumindest einem Aufwuchskörper vorzugsweise in Form eines Biofilms angesiedelt werden. Es ist auch möglich, dass der Aufwuchskörper dazu aus dem System entnommen, beispielsweise mit einer die entsprechenden Bakterien enthaltenen Lösung benetzt und wieder in das System eingesetzt werden kann.

Bei Geschirrspülmaschinen erfolgt nach dem letzten Spülvorgang in der Regel eine Klarspülsphase, bei der die Spülflotte mit einem Klarspülmittel versetzt wird. Die während der Klarspülphase verwendete Spülflüssigkeit weist üblicherweise einen weitaus geringeren Verschmutzungsgrad auf als die während der Hauptspülphase verwendete Spülflotte. Bei einer bevorzugten Ausführungsform des Verfahrens wird daher zumindest oder ausschließlich die während der Klarspülphase verwendete Spülflüssigkeit während oder nach der Klarspülphase zur Wasseraufbereitung in den Wasseraufbereitungsbehälter geleitet. Auf diese Weise wird zumindest die während der Klarspülphase verwendete Spülflüssigkeit aufbereitet und für einen nachfolgenden Spülvorgang aufbewahrt. Analoges gilt für die Zwischenspülphase. Besonders vorteilhaft ist es, wenn die nach der Wasseraufbereitungsphase aus dem Wasseraufbereitungsbehälter ausgeleitete Spülflüssigkeit für einen darauffolgenden Vorspülgang verwendet wird, da beim Vorspülgang keine besonders hohen Anforderungen an die Klarheit der Spülflüssigkeit gestellt werden müssen.

Bei einer weiteren bevorzugten Ausführungsform des Verfahrens wird die Spülflüssigkeit im Wasseraufbereitungsbehälter während der Wasseraufbereitungsphase vorzugsweise über eine separate Umwälzpumpe zumindest zeitweise umgewälzt. Dazu kann auch ein Wasserkreislaufsystem vorgesehen sein, das die Spülflüssigkeit aus dem unteren Bereich des Wasseraufbereitungsbehälters in den oberen Bereich des Wasseraufbereitungsbehälters führt und vorzugsweise über eine Sprühvorrichtung wieder in den Wasseraufbereitungsbehälter einleitet. Dadurch wird die Spülflüssigkeit im Wasseraufbereitungsbehälter intensiv mit Luft durchmischt, der Sauerstoffgehalt erhöht und aufgrund der ständigen Fließbewegung kontinuierlich an den biologisch aktiven Oberflächen des Wasseraufbereitungsbehälters und der Aufwuchskörper vorbeigeführt.

Um die Wirksamkeit der biologisch aktiven Oberflächen nicht zu beinträchtigen, kann vor der Einleitung der Spülflüssigkeit in den Wasseraufbereitungsbehälter noch ein weiterer Verfahrensschritt durchgeführt werden, bei dem die Spülflüssigkeit zur Beseitigung von groben Spülrückständen gefiltert wird.

In einer weiteren bevorzugten Ausführungsform wird die Spülflüssigkeit nach der Wasseraufbereitungsphase von einer Desinfektionseinheit, z. B. mit UV-Licht, Ozon, Wasserstoffperoxid oder Perborat beaufschlagt, um die mit der Spülflüssigkeit aus dem Wasseraufbereitungsbehälter ausgeleiteten Mikroorganismen unwirksam zu machen.

Im Folgenden wird die vorliegende Erfindung anhand von bevorzugten Ausführungsbeispielen unter Bezugnahme auf die beigefügten Zeichnungen näher erläutert. Es zeigen:

Figur 1 eine Schnittdarstellung gemäß einer ersten Ausführungsform;

Figur 2 eine Schnittdarstellung gemäß einer zweiten Ausführungsform.

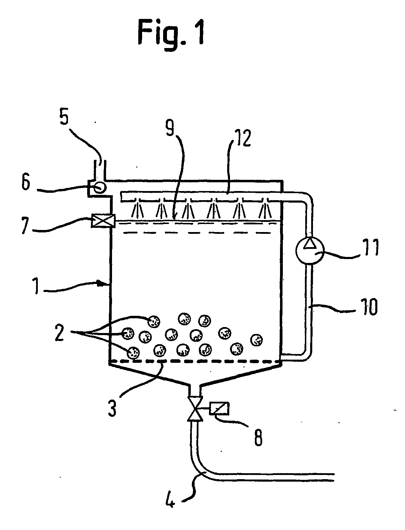

In Figur 1 ist in einer Schnittdarstellung ein System zur Wasseraufbereitung in einer ersten Ausführungsform dargestellt, wie es in einer Geschirrspülmaschine gemäß der vorliegenden Erfindung zum Einsatz kommen kann. Das System umfasst einen Wasseraufbereitungsbehälter 1, der über eine Einlass- bzw. Auslassleitung 4, die durch ein Einlass- bzw. Auslassventils 8 verschließbar ist, mit Spülflüssigkeit aufgefüllt werden kann. Dabei wird dem Wasseraufbereitungsbehälter 1 aus dem Wasserkreislauf der Geschirrspülmaschine (nicht dargestellt) gebrauchte Spülflüssigkeit bis zu einem maximalen Flüssigkeitspegel 9 zugeführt, der durch einen Sensor 7 zur Füllstandserkennung festgestellt wird. Der Wasseraufbereitungsbehälter 1 weist ferner in seinem oberen Bereich eine Entlüftungsöffnung 5 auf, um einerseits das Entweichen von Luft aus dem Wasseraufbereitungsbehälter 1 beim Befüllen des Wasseraufbereitungsbehälters 1 mit Spülflüssigkeit zu erleichtern und andererseits die Sauerstoffzufuhr aus der Umgebung in das Innere des Wasseraufbereitungsbehälters 1 während der Wasseraufbereitungsphase zu gewährleisten. Die Entlüftungsöffnung 5 ist mit einem Überlaufschutzventil 6 ausgestattet, um ein Überlaufen beim Befüllen des Wasseraufbereitungsbehälters 1 zu verhindern. Das Überlaufschutzventil 6 ist in Form einer Kugel ausgebildet, die auf der Spülflüssigkeit aufschwimmt und bei Überfüllung des Wasseraufbereitungsbehälters 1 die Entlüftungsöffnung 5 verschließt.

Zur Füllung des Wasseraufbereitungsbehälters 1 mit Spülflüssigkeit kann eine bezüglich der Fließrichtung der Spülflüssigkeit hinter der Umwälzpumpe der Geschirrspülmaschine angeordnete Wasserweiche (nicht dargestellt) vorgesehen sein. Wenn aus dem Spülkreislauf der Geschirrspülmaschine Spülflüssigkeit entnommen und dem Wasseraufbereitungsbehälter 1 zugeführt werden soll, wird die Wasserweiche so eingestellt, dass die Spülflüssigkeit über die Einlass- bzw. Auslassleitung 4 in den Wasseraufbereitungsbehälter 1 eingeleitet wird. Dadurch kann die Notwendigkeit einer zusätzlichen Pumpe umgangen und stattdessen die Pumpleistung der ohnehin im Geschirrspüler vorhandenen Umwälzpumpe für die Beförderung der Spülflüssigkeit aus dem Spülkreislauf der Geschirrspülmaschine in den Wasseraufbereitungsbehälter 1 ausgenutzt werden. Die Spülflüssigkeit, kann aber auch über eine separate Pumpe (nicht dargestellt) in den Wasseraufbereitungsbehälter 1 eingeleitet werden, was eine vom Betrieb der Umwälzpumpe unabhängige Beförderung der Spülflüssigkeit aus dem Spülkreislauf der Geschirrspülmaschine in den Wasseraufbereitungsbehälter 1 ermöglicht.

Der Wasseraufbereitungsbehälter 1 weist auf seiner Innenseite biologisch aktive Oberflächen auf, die das Wachstum von Mikroorganismen sowie deren Anhaftung begünstigen, um den biologischen Abbauprozess der organischen Inhaltsstoffe in der Spülflüssigkeit während der Wasseraufbereitungsphase zu unterstützen. Darüber hinaus ist im Wasseraufbereitungsbehälter 1 eine Anzahl von kugelförmigen Aufwuchskörpern 2 vorhanden, die auf einem Auflagerost 3 im unteren Bereich des Wasseraufbereitungsbehälters 1 lose gelagert sind. Die Aufwuchskörper 2 weisen ebenfalls eine biologisch aktive Oberfläche auf, die das Wachstum von Mikroorganismen sowie deren Anhaftung auf der Oberfläche begünstigt.

Während der Wasseraufbereitungsphase kann die Spülflüssigkeit über eine separate Umwälzpumpe 11 im Wasseraufbereitungsbehälter 1 zumindest zeitweise umgewälzt werden. Dazu ist ein Wasserkreislaufsystem vorgesehen, das die Spülflüssigkeit aus dem unteren Bereich des Wasseraufbereitungsbehälters 1 über eine Umwälzleitung 10 wieder in den oberen Bereich des Wasseraufbereitungsbehälters 1 einleitet. Dadurch wird die Spülflüssigkeit aufgrund der ständigen Fließbewegung an den biologisch aktiven Oberflächen des Wasseraufbereitungsbehälters 1 und der Aufwuchskörper 2 vorbei geführt, was die biologischen Abbauprozesse begünstigt.

Wie oben beschrieben, ist auch der Sauerstoffgehalt in der Spülflüssigkeit für die Wirksamkeit der biologischen Abbauprozesse von maßgebende Bedeutung. Die in Figur 1 dargestellte Ausführungsform des Systems zur Wasseraufbereitung weist deshalb eine Vorrichtung zur Belüftung der Spülflüssigkeit zur Sauerstoffzufuhr in die Spülflüssigkeit auf. Dabei wird die Spülflüssigkeit aus der Umwälzleitung 10 über eine im oberen Bereich des Wasseraufbereitungsbehälters 1 angeordnete Sprühvorrichtung 12 in den Wasseraufbereitungsbehälter 1 eingeleitet. Die Sprühvorrichtung 12 umfasst Düsen, welche die Spülflüssigkeit beim Einleiten in den Wasseraufbereitungsbehälter 1 zerstäuben, so dass die Spülflüssigkeit dabei Sauerstoff aus der Luft aufnehmen kann. Nach der Wasseraufbereitungsphase wird die wiederaufbereitete Spülflüssigkeit aus dem Wasseraufbereitungsbehälter 1 unter Öffnung des Einlass- bzw. Auslassventils 8 über die Einlass- bzw. Auslassleitung 4 in den Wasserkreislauf der Geschirrspülmaschine zurückgeführt.

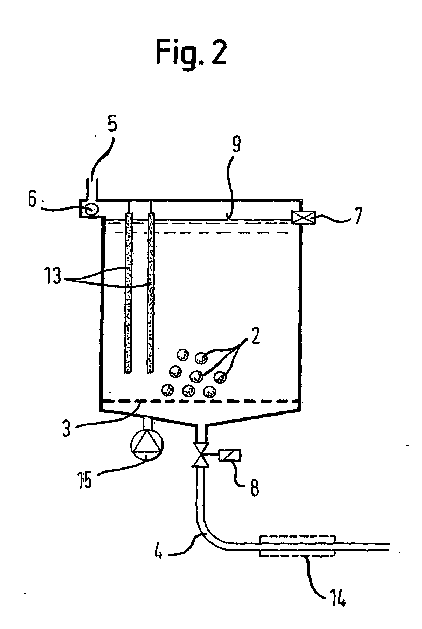

In Figur 2 ist eine Schnittdarstellung eines System zur Wasseraufbereitung in einer zweiten Ausführungsform dargestellt, wie es in einer Geschirrspülmaschine gemäß der vorliegenden Erfindung zum Einsatz kommen kann. Das in Figur 2 gezeigte System ist mit der in Figur 1 dargestellten ersten Ausführungsform teilweise identisch, so dass auf die vorangehende Beschreibung der ersten Ausführungsform Bezug genommen wird und anschließend nur die Unterschiede erläutert werden. Bestandteile der in Figur 2 gezeigten zweiten Ausführungsform, die mit Bestandteilen der in Figur 1 dargestellten ersten Ausführungsform identisch sind wurden mit den selben Bezugszeichen gekennzeichnet.

Bei dem in Figur 2 dargestellten Ausführungsform sind neben den kugelförmigen Aufwuchskörpern 2 zusätzlich stab- oder scheibenförmige Aufwuchskörper 13 vorgesehen, die jeweils eine biologisch aktive Oberfläche aufweisen, welche das Wachstum von Mikroorganismen sowie deren Anhaftung auf der Oberfläche begünstigt. Alternativ oder zusätzlich zu dem Wasserkreislaufsystem mit der Umwälzleitung 10 und der separaten Umwälzpumpe 11 zur Umwälzung der Spülflüssigkeit im Wasseraufbereitungsbehälter 1 der ersten Ausführungsform ist in der zweiten Ausführungsform eine Luftpumpe 15 zur Belüftung der Spülflüssigkeit vorgesehen. Die Luftpumpe 15 ist im unteren Teil außerhalb des Wasseraufbereitungsbehälters 1 angeordnet und leitet zumindest zeitweise Luft aus der Umgebung in die im Wasseraufbereitungsbehälter 1 enthaltene Spülflüssigkeit ein, um den Sauerstoffgehalt in der Spülflüssigkeit zu erhöhen und damit einen aeroben Zustand zu erhalten.

Das System zur Wasseraufbereitung weist in der zweiten Ausführungsform eine Desinfektionseinheit, z. B. eine UV-Lampe 14 oder Einrichtungen zur Zugabe von Ozon, Wasserstoffperoxid oder Perborat auf, die beispielsweise im Bereich einer Einlass- bzw. Auslassleitung 4 aus dem Wasseraufbereitungsbehälter 1 angeordnet ist, um die mit der Spülflüssigkeit aus dem Wasseraufbereitungsbehälter 1 ausgeleiteten Mikroorganismen unwirksam zu machen. Damit wird erreicht, dass die im Wasseraufbereitungsbehälter 1 aktiven Mikroorganismen, die mit der Spülflüssigkeit beim Ablassen aus dem Wasseraufbereitungsbehälter 1 ausgespült werden, unwirksam sind, nachdem sie mit UV-Licht, Ozon, Wasserstoffperoxid oder Perboraten beaufschlagt wurden.

### [036] Liste der Bezugszeichen

[037] 1 Wasseraufbereitungsbehälter
[038] 2 kugelförmige Aufwuchskörper
[039] 3 Auflagerost für die Aufwuchskörper
[040] 4 Zufuhr- und Auslassleitung des Wasseraufbereitungsbehälters
[041] 5 Entlüftungsöffnung des Wasseraufbereitungsbehälter
[042] 6 Überlaufschutzventil
[043] 7 Sensor zur Füllstandserkennung
[044] 8 Einlass- bzw. Auslassventil
[045] 9 Spülflüssigkeitspegel
[046] 10 Umwälzleitung
[047] 11 separate Umwälzpumpe
[048] 12 Sprühvorrichtung
[049] 13 stab- oder scheibenförmige Aufwuchskörper
[050] 14 Desinfektionseinheit
[051] 15 Luftpumpe

## Patentansprüche

1. Geschirrspülmaschine, umfassend ein System zur Wasseraufbereitung, das System umfassend einen Wasseraufbereitungsbehälter (1), der zumindest einen Teil der während des Spülbetriebs der Geschirrspülmaschine verwendeten Spülflüssigkeit aufnehmen kann, **dadurch gekennzeichnet, dass** im Wasseraufbereitungsbehälter (1) während einer Wasseraufbereitungsphase mit Hilfe von Mikroorganismen die in der Spülflüssigkeit enthaltenen Verunreinigungen zumindest teilweise biologisch abgebaut werden, wobei der Wasseraufbereitungsbehälter (1) biologisch aktive Oberflächen aufweist, die das Wachstum der Mikroorganismen sowie deren Anhaftung auf der Oberfläche begünstigen und die mit der Spülflüssigkeit während der Wasseraufbereitungsphase zumindest zeitweise in Kontakt stehen

2. Geschirrspüler nach Anspruch 1, wobei die Mikroorganismen insbesondere für den biologischen Abbau der organischen Inhaltsstoffe in der Spülflüssigkeit geeignet sind.

3. Geschirrspüler nach einem der vorangehenden Ansprüche, wobei das System zumindest einen vorzugsweise im Wasseraufbereitungsbehälter (1) angeordneten Aufwuchskörper (2, 13) mit biologisch aktiver Oberfläche aufweist, die das Wachstum der Mikroorganismen sowie deren Anhaftung auf der Oberfläche begünstigt.

4. Geschirrspüler nach Anspruch 3, wobei der zumindest eine Aufwuchskörper (2, 13) aus mechanisch und biologisch beständigem, zumindest teilweise aus Kunststoff oder Keramik hergestelltem Material besteht, wie z.B. Blähton, Lava, Anthrazit oder Basalt, und dessen Oberfläche vorzugsweise mit organischen Polymeren belegt ist.

5. Geschirrspüler nach einem der vorangehenden Ansprüche, wobei das System eine Vorrichtung (10, 11, 12, 15) zur Belüftung der Spülflüssigkeit zur Sauerstoffzufuhr in die Spülflüssigkeit aufweist.

6. Geschirrspüler nach Anspruch 5, wobei die Vorrichtung zur Belüftung der Spülflüssigkeit eine Luftpumpe (15) umfasst, die vorzugsweise im unteren Bereich des Wasseraufbereitungsbehälters (1) zumindest zeitweise Luft in die im Wasseraufbereitungsbehälter (1) enthaltene Spülflüssigkeit einleitet.

7. Geschirrspüler nach einem der Ansprüche 5 oder 6, wobei die Vorrichtung zur Belüftung der Spülflüssigkeit zur Sauerstoffzufuhr in die Spülflüssigkeit eine Sprühvorrichtung (12) umfasst, die vorzugsweise im oberen Bereich des Wasseraufbereitungsbehälters (1) zumindest zeitweise Spülflüssigkeit in den Wasseraufbereitungsbehälter (1) einleitet.

8. Geschirrspüler nach einem der vorangehenden Ansprüche, wobei die Spülflüssigkeit über eine bezüglich der Fließrichtung der Spülflüssigkeit hinter der Umwälzpumpe (11) der Geschirrspülmaschine angeordneten Wasserweiche in den Wasseraufbereitungsbehälter (1) eingeleitet wird.

9. Geschirrspüler nach einem der vorangehenden Ansprüche, wobei die Spülflüssigkeit über eine separate Pumpe in den Wasseraufbereitungsbehälter (1) eingeleitet wird.

10. Geschirrspüler nach einem der vorangehenden Ansprüche, wobei das System eine Desinfektionseinheit, z. B. eine UV-Lampe (14) oder eine Einrichtung zur Zugabe von Ozon, Wasserstoffperoxid oder Perborat aufweist, die vorzugsweise im Bereich einer Auslassleitung aus dem Wasseraufbereitungsbehälter (1) angeordnet ist, um die mit der Spülflüssigkeit aus dem Wasseraufbereitungsbehälter (1) ausgeleiteten Mikroorganismen unwirksam zu machen.

## Claims

1. Dishwashing machine comprising a system for water preparation, the system comprising a water preparation container (1), which can receive at least part of the rinsing liquid used during the rinsing operation of the dishwashing machine, **characterised in that** contaminants contained in the rinsing liquid are at least partly biologically broken down in the water preparation container (1) with the help of micro-organisms during a water preparation phase, wherein the water preparation container (1) has biologically active surfaces which promote the growth of the micro-organisms as well as adhesion thereof to the surface and which at least partly come into contact with the rinsing liquid during the water preparation phase.

2. Dishwasher according to claim 1, wherein the micro-organisms are particularly suitable for biological degradation of the organic components in the rinsing liquid.

3. Dishwasher according to one of the preceding claims, wherein the system comprises at least one periphytic body (2, 13), which is preferably arranged in the water preparation container (1), with biologically active surface, which promotes growth of the micro-organisms as well as adhesion thereof to the surface.

4. Dishwasher according to claim 3, wherein the at least one periphytic body (2, 13) consists of mechanically and biologically resistant material produced at least partly from plastic or ceramic, such as, for example, swelling clay, lava, anthracite or basalt, and the surface of which is preferably covered with organic polymers.

5. Dishwasher according to one of the preceding claims, wherein the system comprises a device (10, 11, 12, 15) for aeration of the rinsing liquid for the feed of oxygen to the rinsing liquid.

6. Dishwasher according to claim 5, wherein the device for aeration of the rinsing liquid comprises an air pump (15) which introduces air at least periodically into the rinsing liquid, which is contained in the water preparation container (1), preferably in the lower region of the water preparation container (1).

7. Dishwasher according to one of claims 5 and 6, wherein the device for aeration of the rinsing liquid for feed of oxygen into the rinsing liquid comprises a spray device (12) which introduces rinsing liquid at least periodically into the water preparation container (1) preferably in the upper region of the water preparation container (1).

8. Dishwasher according to one of the preceding claims, wherein the rinsing liquid is introduced into the water preparation container (1) by way of a water softener which with respect to the flow direction of the rinsing liquid is arranged behind the circulating pump (11) of the dishwashing machine.

9. Dishwasher according to one of the preceding claims, wherein the rinsing liquid is introduced into the water preparation container (1) by way of a separate pump.

10. Dishwasher according to one of the preceding claims, wherein the system comprises a disinfecting unit, for example an ultraviolet lamp (14) or a device for addition of ozone, hydrogen peroxide or perborate, which is preferably arranged in the region of an outlet duct from the water preparation container (1) in order to render the micro-organisms, which are conducted out of the water preparation container (1) together with the rinsing liquid, inactive.

## Revendications

1. Lave-vaisselle comprenant un système de traitement d'eau, le système comprenant un récipient de traitement d'eau (1) qui peut admettre au moins une partie du liquide de lavage utilisé pendant que le lave-vaisselle lave, **caractérisé en ce que** les impuretés contenues dans le liquide de lavage subissent, dans le récipient de traitement d'eau (1), au moins en partie une biodégradation à l'aide de microorganismes pendant une phase de traitement d'eau, le récipient de traitement d'eau (1) présentant des surfaces biologiquement actives qui favorisent la croissance des microorganismes ainsi que leur adhésion à la surface et qui sont en contact, du moins par intermittence, avec le liquide de lavage pendant la phase de traitement d'eau.

2. Lave-vaisselle selon la revendication 1, les microorganismes étant appropriés en particulier pour la biodégradation des composants organiques dans le liquide de lavage.

3. Lave-vaisselle selon l'une des revendications précédentes, le système présentant au moins un corps de croissance (2, 13) situé préférentiellement dans le récipient de traitement d'eau (1) et comportant une surface biologiquement active qui favorise la croissance des microorganismes ainsi que leur adhésion à la surface.

4. Lave-vaisselle selon la revendication 3, l'au moins un corps de croissance (2, 13) se composant d'une matière mécaniquement et biologiquement stable, réalisée au moins en partie en matière plastique ou en céramique, telle que, par exemple, de l'argile expansée, de la lave, de l'anthracite ou du basalte, et dont la surface est préférentiellement couverte de polymères organiques.

5. Lave-vaisselle selon l'une des revendications précédentes, le système comportant un dispositif (10, 11, 12, 15) pour aérer le liquide de lavage aux fins de l'apport d'oxygène dans le liquide de lavage.

6. Lave-vaisselle selon la revendication 5, le dispositif d'aération du liquide de lavage comprenant une pompe à air (15) qui introduit, au moins par intermittence, de l'air dans le liquide de lavage contenu dans le récipient de traitement d'eau (1), de préférence dans la partie inférieure du récipient de traitement d'eau (1).

7. Lave-vaisselle selon l'une des revendications 5 ou 6, le dispositif d'aération du liquide de lavage comprenant, aux fins de l'apport d'oxygène dans le liquide de lavage, un dispositif d'aspersion (12) qui introduit, au moins par intermittence, du liquide de lavage dans le récipient de traitement d'eau (1), de préférence dans la partie supérieure du récipient de traitement d'eau (1).

8. Lave-vaisselle selon l'une des revendications précédentes, le liquide de lavage étant introduit dans le récipient de traitement d'eau (1) par l'intermédiaire d'un distributeur d'eau situé derrière la pompe de circulation (11) du lave-vaisselle par rapport au sens de l'écoulement du liquide de lavage.

9. Lave-vaisselle selon l'une des revendications précédentes, le liquide de lavage étant introduit dans le récipient de traitement d'eau (1) par l'intermédiaire d'une pompe séparée.

10. Lave-vaisselle selon l'une des revendications précédentes, le système comportant une unité de désinfection, par exemple une lampe UV (14) ou un dispositif d'apport d'ozone, de peroxyde d'hydrogène ou de perborate, laquelle est située préférentiellement dans la zone d'une conduite d'évacuation hors du récipient de traitement d'eau (1) pour rendre inactifs les microorganismes éliminés avec le liquide de lavage hors du récipient de traitement d'eau (1).
